# EUROPÄISCHE PATENTANMELDUNG

(11) **EP 3 560 324 A1**
(43) Veröffentlichungstag der Anmeldung: **30.10.2019**
(21) Anmeldenummer: 19170215.8
(22) Anmeldetag: 18.04.2019
(51) Int. Cl.: A01G 9/12

(54) **PFLANZENSTÜTZSYSTEM**

(30) Priorität: 24.04.2018 DE 102018109827
(71) Anmelder: Haseneder, Franz Josef, 85435 Erding (DE)
(72) Erfinder: Haseneder, Franz Josef, 85435 Erding (DE)
(74) Vertreter: Bobbert & Partner Patentanwälte PartmbB

(57) **Zusammenfassung**

Die vorliegende Erfindung betrifft ein Pflanzenstützsystem (100), aufweisend wenigstens eine erste Stange (1a) und eine zweite Stange (1b) zum Stützen wenigstens einer Pflanze (27) hieran, sowie ein lösbares Verbindungselement (3a) zum Verbinden der beiden Stangen (1a, 1b) miteinander, wobei das Verbindungselement (3a) längs der ersten Stange (1a) und/oder längs der zweiten Stange (1b) verschiebbar ist, sodass wenigstens eine der beiden Stangen (1a, 1b) an ein Pflanzenwachstum angepasst werden kann.

## Beschreibung

Die vorliegende Erfindung betrifft ein Pflanzenstützsystem mit relativ zueinander verschiebbaren Stangen zum Anpassen des Pflanzenstützsystems an ein Wachstum der gestützten Pflanze gemäß dem Oberbegriff des Anspruchs 1. Sie betrifft ferner ein Verbindungselement gemäß dem Oberbegriff des Anspruchs 15.

Pflanzenstützsysteme werden beispielsweise als sogenannte Spaliere in Form von gitterartigen Konstruktionen verwendet, um Pflanzen in eine gewünschte Wuchsform zu bringen. Ebenso können Pflanzenstützsysteme als sogenannte Kletterhilfen bzw. Rankgerüste für Kletterpflanzen verwendet werden, damit diese Kletterpflanzen eigenständig an den Kletterhilfen emporwachsen. Pflanzenstützsysteme können an einer Hauswand angebracht sein oder als freistehende Konstruktion errichtet werden.

Es ist Aufgabe der vorliegenden Erfindung, ein weiteres Pflanzenstützsystem und ein weiteres Verbindungselement vorzuschlagen.

Die erfindungsgemäße Aufgabe kann durch ein aufgebautes oder als noch zu montierendes Set vorliegendes Pflanzenstützsystem mit wenigstens einer ersten und einer zweiten Stange sowie einem, insbesondere lösbaren, Verbindungselement zum Verbinden der beiden Stangen miteinander mit den Merkmalen des Anspruchs 1 gelöst werden.

Somit wird erfindungsgemäß ein Pflanzenstützsystem vorgeschlagen, das wenigstens eine erste Stange und eine zweite Stange zum Stützen wenigstens einer Pflanze hieran aufweist. Das Pflanzenstützsystem weist weiterhin ein, insbesondere lösbares, Verbindungselement zum Verbinden der beiden Stangen miteinander auf. Das Verbindungselement ist längs der ersten Stange und/oder längs der zweiten Stange verschiebbar. Hierdurch kann das Pflanzenstützsystem und/oder wenigstens eine der beiden Stangen, z. B. in ihrer Ausrichtung auf die andere Stange, an ein Pflanzenwachstum angepasst werden.

Die erfindungsgemäße Aufgabe kann ferner durch ein Verbindungselement gemäß dem Oberbegriff des Anspruchs 15 gelöst werden.

Das Verbindungselement kann ausgestaltet sein, um wenigstens eine erste Stange lösbar festzulegen und um wenigstens eine zweite Stange lösbar festzulegen. Damit werden die erste und zweite Stange lösbar miteinander verbunden. Diese Verbindung kann dem Bilden eines erfindungsgemäßen Pflanzenstützsystems dienen oder Teil eines solchen sein.

Erfindungsgemäße, beispielhafte Ausführungsformen können eines oder mehrere der im Folgenden genannten Merkmale in beliebiger Kombination aufweisen, sofern eine, oder die, konkrete Kombination für den Fachmann nicht als offenkundig technisch unmöglich erkennbar ist. Auch die Gegenstände der Unteransprüche geben jeweils erfindungsgemäße, beispielhafte Ausführungsformen an.

Bei allen oben gemachten und unten folgenden Ausführungen ist der Gebrauch des Ausdrucks "kann sein" bzw. "kann haben" usw. synonym zu "ist vorzugsweise" bzw. "hat vorzugsweise" usw. zu verstehen und soll erfindungsgemäße, beispielhafte Ausführungsformen erläutern.

"Oben", "unten" sowie weitere räumliche Beziehungen sind im Zweifel auf die Anordnung in den Figuren zu verstehen.

Wann immer hierin Alternativen mit "und/oder" eingeführt werden, so versteht der Fachmann das darin enthaltene "oder" vorzugsweise als "entweder oder" und vorzugsweise nicht als "und".

Wann immer hierin Zahlenworte genannt werden, so versteht der Fachmann diese als Angabe einer zahlenmäßig unteren Grenze. Sofern dies zu keinem für den Fachmann erkennbaren Widerspruch führt, liest der Fachmann optional daher beispielsweise bei der Angabe "ein" oder "einem" stets "wenigstens ein" oder "wenigstens einem" mit. Dieses Verständnis ist ebenso von der vorliegenden Erfindung mit umfasst wie die Auslegung oder Offenbarung, dass ein Zahlenwort wie beispielsweise "ein" optional oder alternativ als "genau ein" zu verstehen sein kann, wo immer dies für den Fachmann erkennbar technisch möglich ist. Beides ist von der vorliegenden Erfindung wahlweise umfasst und gilt für alle hierin verwendeten Zahlenworte.

Hierin genannte Ausführungsformen sind als erfindungsgemäße, rein exemplarische Ausführungsformen der vorliegenden Erfindung zu verstehen, die nicht als beschränkend zu verstehen sind.

Ein Pflanzenstützsystem kann in manchen Ausführungsformen eine gitterartige Vorrichtung sein, an der Pflanzen befestigt werden oder an der z. B. Kletterpflanzen eigenständig emporwachsen können. Die Pflanzen können Nutzpflanzen (z. B. Obstbaumtriebe, Weinreben), Zierpflanzen (z. B. Rosen) oder andere Pflanzen sein.

Ein Pflanzenstützsystem für Kletterpflanzen kann als Kletterhilfe oder als Rankgerüst bezeichnet werden. Ein Pflanzenstützsystem, an dem nicht kletternde Pflanzen bzw. deren Triebe befestigt, z. B. angebunden, werden, können mithilfe des Pflanzenstützsystems in eine gewünschte Wuchsform gebracht werden, z. B. indem Pflanzenabschnitte an Abschnitten z. B. der Stangen festgebunden werden. Diese Art von Pflanzenstützsystem kann als Spalier bezeichnet werden. Ein Spalier kann an einer Hauswand angebracht sein oder als freistehende Konstruktion genutzt werden. Spaliere können aus Holz, Metall, Draht oder Faserverbundwerkstoffen, z. B. aus einem glasfaserverstärkten Kunststoff, hergestellt werden oder eines oder beliebige mehrere dieser Materialien aufweisen.

Eine Stange des Pflanzenstützsystems kann ein länglicher Gegenstand, ein gerades Bauelement oder ein längliches Halbzeug sein. Eine Stange kann aus Kunststoff, einem Verbundwerkstoff oder aus einem anderen Material hergestellt sein oder wenigstens eines dieser Materialien aufweisen.

Ein Verbindungselement zum Verbinden der beiden Stangen miteinander kann in manchen Ausführungsformen als ein Funktionselement bezeichnet werden. Das Verbindungselement kann eine Klemme, eine Klammer, eine Manschette, ein Bügel, ein Befestigungsring, ein Befestigungsband oder Ähnliches sein. Das Verbinden kann als lösbares Fixieren oder als Klemmen bezeichnet werden.

In einigen Ausführungsformen ist das Verbindungselement lösbar oder abnehmbar von jeder im Gebrauch mit ihm verbundenen Stange ausgestaltet. Damit kann das Verbindungselement von Stangen, mit denen es verbunden ist, abgenommen oder gelöst werden. Es kann anschließend an anderer Stelle des Pflanzenstützsystems wieder mit anderen Stangen verbunden werden und an dieser neuen Stelle innerhalb des Pflanzenstützsystems zum Einsatz kommen. In solchen Ausführungsformen kann das Verbindungselement auch als lösbares Verbindungselement bezeichnet werden. Unter der Lösbarkeit des Verbindungselements von den Stangen ist also nicht nur eine Verschiebbarkeit des Verbindungselements längs einer oder mehrerer Stangen zu verstehen. Ein lösbares Verbindungselement ist vielmehr von den Stangen optional auch abnehmbar.

In manchen Ausführungsformen weist das Verbindungselement ein Klemmsystem zum kraftschlüssigen und/oder formschlüssigen, insbesondere lösbaren, Fixieren der Stangen mit dem oder am Verbindungselement auf. Ein rein kraftschlüssiges Klemmsystem könnte beispielsweise die beiden Stangen mittels einer Klammergegeneinander oder jede für sich - zusammendrücken, sodass sich die Stangen aufgrund eines Reibwiderstands der Oberflächen der Stangen nicht mehr gegeneinander verschieben lassen. Weiter kann eine raue Oberfläche der Stangen in diesem Kontaktbereich den Reibwiderstand erhöhen und vorgesehen sein. Die Höhe der Presskraft bzw. des Pressdrucks auf die Stangen, beispielsweise durch eine Klammer oder ein anderes Verbindungselement, ist ebenfalls ein wichtiger Einflussfaktor in dieser Ausführungsform, wobei die Festigkeit der Stangen, basierend auf dem Stangenmaterial, eine wesentliche Rolle spielt.

Ein formschlüssiges Fixieren könnte beispielsweise durch Stifte, Kanten, Absätze oder dergleichen, die an den Stangen, insbesondere lösbar, fixiert werden, erfolgen.

Ein Verbindungselement könnte dann mittels dieser Stifte, Kanten etc. formschlüssig fixiert werden, sodass die Stangen gegen ein Bewegen oder Verschieben blockiert werden. Derartige Stifte, Kanten, usw. können Teil des Verbindungselements sein oder diesem zugeordnet werden.

Ein kraftschlüssiges und formschlüssiges Fixieren kann die beiden beschriebenen Varianten kombinieren, beispielsweise durch eine Klammer, die, mittels einer Presskraft auf eine, zumindest bereichsweise, formschlüssige Fixierung der Stangen mit der Klammer, die Stangen gegen ein Bewegen oder Verschieben fixiert. Dies hätte den Vorteil, dass einerseits die Presskraft geringer gegenüber einer rein kraftschlüssigen Ausführungsform gewählt werden kann, und andererseits die Formelemente, also beispielsweise die Stifte oder Kanten, kleiner dimensioniert werden können.

In manchen Ausführungsformen umgreift das Verbindungselement wenigstens zwei Stangen vollständig oder zumindest bereichsweise, z. B. entlang deren Umfänge oder Teilen hiervon. Dies kann beispielsweise mittels einer bereichsweise formgetreuen Abbildung des äußeren Umfangs (oder eines Teils hiervon) der Stangen in der Form des Verbindungselements sein.

In manchen Ausführungsformen weist das Verbindungselement zwei - z. B. scheibenförmige - Elemente (kurz: Scheibe oder Scheiben) auf.

In manchen Ausführungsformen könnte ein Profil oder Teilprofil - rein exemplarisch Rundprofil - der Stangen als Teil- oder Halbschalenform oder -formen in dem Verbindungselement abgebildet werden bzw. abgeformt sein.

Solche Teil- oder Halbschalenform oder -formen können als Vertiefungen oder Aussparungen im Verbindungselement oder in jeweils seinen scheibenförmigen

Elementen ausgestaltet sein. Die Teil- oder Halbschalenform kann auch als Nut oder Rinne bezeichnet werden.

In einigen Ausführungsformen verlaufen die Teil- oder Halbschalenformen in einer Haupterstreckungsebene des Verbindungselements oder seiner scheibenförmigen Elemente oder parallel zu dieser.

In manchen Ausführungsformen verlaufen die Teil- oder Halbschalenformen nicht durch einen Mittelbereich oder zentralen Bereich der Haupterstreckungsebene des scheibenförmigen Elements. Der zentrale Bereich oder der Mittelbereich kann in diesen Ausführungsformen vorteilhaft genutzt werden, um eine Durchgangsbohrung oder -Öffnung vorzusehen, die wie hierin beschrieben genutzt werden kann, etwa für die Aufnahme einer Schraube.

Wenn beide Oberflächen, sowohl die der Stangen als auch die der abgebildeten Form des Verbindungselements, glatt sind, kann das Verbindungselement relativ leicht, das heißt ohne hohen Kraftaufwand, entlang einer der verbundenen Stangen verschoben werden. Dies gilt in gleicher Weise für ein Verschieben einer Stange, wenn das Verbindungselement an der anderen Stange fixiert bzw. nicht bewegbar ist. In diesem Fall müsste eine aufzubringende Presskraft zum Fixieren der Stangen mittels eines Klemmsystems höher gegenüber rauen Oberflächen der Stangen und/oder der Form des Verbindungselements sein. Rauere Oberflächen resultieren in einem höheren Reibwiderstand und somit in einer höheren aufzubringenden Kraft, um diesen Reibwiderstand zu überwinden.

In manchen Ausführungsformen weist das Verbindungselement zwei - z. B. scheibenförmige - Elemente (kurz: Scheibe oder Scheiben) auf, die auf ihrer Innenseite - gemeinsam und/oder einzeln für sich - zumindest bereichsweise das Außenprofil der Stangen abbilden oder eine Aufnahme hierfür haben.

Eine Scheibe kann ein geometrischer Körper sein, der zumeist um ein Vielfaches breiter und/oder länger als hoch ist.

Eine Scheibe kann in Draufsicht rund oder eckig, z. B. viereckig oder vieleckig, sein. Eine Scheibe kann entlang ihres Umfangs z. B. 10, 15 oder mehr Ecken aufweisen. Hat der Umfang mehr als 10 Ecken, so würde dies erfindungsgemäß bereits als rund gelten können, insbesondere, wenn die Ecken gleich voneinander beabstandet sind und/oder denselben Abstand zu einem Mittelpunkt der Scheibe aufweisen.

Eine Scheibe kann einen Radius oder mehrere, z. B. konzentrische, Radien aufweisen.

Eine Scheibe kann die Außenkontur eines Zylinders haben.

Eine Scheibe kann einen trapezförmigen Querschnitt aufweisen und/oder eine Schicht eines Kegels bilden.

Was hierin über scheibenförmige Elemente ausgeführt ist, kann in beliebigen Ausführungsformen auch für nicht scheibenförmige Elemente zutreffen.

Was hierin über eine Scheibe gesagt ist, kann auch für Bauteile gelten, die nicht in wenigstens einer Erstreckungsrichtung breiter als hoch sind.

Die vorzugsweise scheibenförmigen Elemente können jeweils derart eine oder mehrere Durchgangsbohrungen oder -Öffnungen aufweisen. Durch sie hindurch können z. B. je eine Schrauben-Mutter-Verbindung oder eine andere Konnektionseinrichtung hindurchgesteckt werden oder sein.

In manchen Ausführungsformen weist wenigstens eines oder beide der scheibenförmigen Elemente nur genau eine solche Durchgangsbohrung oder - öffnung auf.

In einigen Ausführungsformen ist durch jedes der beiden Elemente nur je eine Konnektionseinrichtung hindurchgeführt, insbesondere im Gebrauch der Erfindung.

In manchen Ausführungsformen weist wenigstens eines oder beide der scheibenförmigen Elemente eine Durchgangsbohrung oder -Öffnung auf, welche zentral im Element liegt, z. B. in einem Mittelpunkt oder geometrischen Mittelpunkt hiervon.

In einigen Ausführungsformen weist wenigstens eines oder beide der scheibenförmigen Elemente eine Durchgangsbohrung oder -Öffnung auf, welche kein Innengewinde trägt. Das Verklemmen der beiden Elemente gegeneinander mittels einer Schraube und einer Mutter kann dabei vorteilhafterweise mittels Schraubbewegung erfolgen, ohne dass sich eines der beiden Elemente aufgrund der Drehbewegung relativ zum anderen verdreht. Ein gewünschter Winkel zwischen den beiden mittels des Verbindungselements verbundenen Stangen kann somit zunächst locker eingestellt werden und wird durch das Verschrauben der beiden Elemente gegeneinander vorteilhaft nicht mehr nachteilig beeinflusst oder verändert. Das Nichtvorsehen eines Gewindes kann ferner das Einbringen oder Fertigen eines Gewindes in dem z. B. mittels Spritzgusses gefertigten Verbindungselement vorteilhaft erübrigen.

In manchen Ausführungsformen ist das Verbindungselement nach ausreichendem Aufheben der Verklemmung der beiden Stangen längs der ersten Stange und/oder längs der zweiten Stange verschiebbar, insbesondere im Gebrauch des Pflanzenstützsystems. Dabei kann es optional auch möglich sein, das Verbindungselement bei feststehender (da beispielsweise relativ zur Hauswand unverschieblich gehaltener) erster oder zweiter Stange entlang dieser zu verschieben und eine gewünschte Strecke weiter entlang der Stange erneut zu verklemmen.

Die vorzugsweise scheibenförmig ausgeführten Elemente können jeweils derart ausgestaltet sein, dass nur eines hiervon auf seiner Innenseite, also auf der der Stange im Gebrauch zugewandten Seite, zumindest bereichsweise das Außenprofil beider Stangen abbildet.

Die Stangen können in der Scheibe, insbesondere auch wenn diese stehend angeordnet ist, beispielsweise in unterschiedlichen Höhen (die Höhe kann als

Dicke der Scheibe bezeichnet werden) der Scheibe angeordnet sein, sodass beide Stangen in einer senkrechten (in Bezug auf die Längsausrichtung der Stangen) Anordnung zueinander mittels des Verbindungselements fixierbar sind.

Optional bilden zwei scheibenförmige Elemente jeweils auf ihrer Innenseite zumindest bereichsweise das Außenprofil der Stangen ab. Beispielsweise könnte jeweils eine Stange mit einem Teilbereich seiner äußeren Oberfläche und einem Längenabschnitt der Stange in ein scheibenförmiges Element auf dessen Innenseite eingelegt werden, sodass die jeweiligen Oberflächen der beiden Stangen direkt aneinandergrenzen. Insbesondere ragt zumindest ein Teilbereich der Oberfläche der Stange über die innere, vorzugsweise ebene, Oberfläche des scheibenförmigen Elements hinaus. Wenn anschließend die beiden scheibenförmigen Elemente mit ihren Innenseiten aneinandergelegt werden, kommt optional ein direkter Kontakt der Oberflächen der Stangen zustande, die jeweils über die Innenseite des jeweiligen scheibenförmigen Elements hinausragen. Wenn weiterhin die beiden scheibenförmigen Elemente aneinandergepresst werden, werden die Stangen in die abgebildete Form der Scheiben hineingedrückt und/oder gegeneinander verklemmt und somit gegen ein Längsverschieben der Stangen innerhalb des Verbindungselements oder relativ zu diesem blockiert bzw. fixiert.

In manchen Ausführungsformen besteht das Verbindungselement aus zwei scheibenförmigen Elementen und einer Konnektionseinrichtung zwischen beiden, etwa ausgestaltet als eine oder genau eine Schraube, eine Schraube mit Mutter (mit oder ohne Unterlegscheiben), eine Feder oder dergleichen.

In manchen Ausführungsformen weist das Verbindungselement zwei identische scheibenförmige Elemente auf. Zwei identische scheibenförmige Elemente sind geometrisch identisch, sodass zwei beliebige solcher scheibenförmigen Elemente oder Scheiben miteinander verwendet bzw. mittels einer Konnektionseinrichtung, z. B. eines Klemmsystems, fixierbar sind. Dies ist sowohl hinsichtlich der Fertigung als auch der Montage der scheibenförmigen Elemente vorteilhaft, da nicht ein exakt zusammengehöriges Paar von z. T. voneinander verschiedenen Scheiben hergestellt (was vorzugsweise einen Spritzguss für das jeweils zweite Element einsparen lässt) und montiert werden muss. Die Stangenprofile und das Klemmsystem müssen dann entsprechend dieser identischen scheibenförmigen Elemente ausgewählt und/oder konstruiert werden.

In manchen Ausführungsformen bildet jede Innenseite der scheibenförmigen Elemente zumindest bereichsweise das Außenprofil (oder Abschnitte des Umfangs) nur einer der beiden Stangen ab.

In einigen Ausführungsformen ist die Innenseite ohne Vorsprünge, die über eine Kontaktfläche oder Hauptkontaktfläche zwischen zwei scheibenförmigen Elementen hervorstehen würden. Diese Ausgestaltung kann einer Verdrehbarkeit des einen Elements gegenüber dem anderen begünstigen.

In manchen Ausführungsformen bilden die Innenseiten der scheibenförmigen Elemente jeweils zumindest bereichsweise das Außenprofil einer der beiden Stangen ab, sodass jeweils eine Stange mittels Reibschluss zwischen einem Bereich einer Innenseite und einem Bereich einer Oberfläche einer Stange kraftschlüssig gegen ein Verschieben in Längsrichtung der Stange fixierbar ist. Der Reibwiderstand hängt unter anderem von der Oberflächenrauigkeit und dem Material der jeweiligen Reibpaarung, also der Stange und dem scheibenförmigen Element, ab. Ferner hängt der Kraftschluss von der aufzubringenden Kraft ab, die auf die scheibenförmigen Elemente ausgeübt wird.

In manchen Ausführungsformen sind die Stangen längliche Hohlkörper, die als Rohre oder rohrförmige Stangen bezeichnet werden können. Die Stangen können, insbesondere rohrförmige, Rundprofile und/oder, insbesondere rohrförmige, Rechteckprofile, jeweils als Querschnittsprofile, sein oder solche aufweisen. Die Stangen können Rundprofile, Rechteckprofile, Dreieckprofile, ovale Profile oder eine andere Form aufweisen. Die verwendeten Stangen, z. B. die erste und die zweite, können identische oder, z. B. zwischen erster und zweiter Stange, verschiedene Querschnittsprofile aufweisen.

Rein exemplarisch können die Stangen als Rundprofile einen Außendurchmesser zwischen 4 mm und 20 mm aufweisen, bevorzugt zwischen 5 mm und 10 mm, weiter bevorzugt 6 mm.

In manchen Ausführungsformen sind die Stangen aus Metall hergestellt oder weisen Metall auf. Das Metall kann rostfreier Stahl, Aluminium oder ein anderes Metall sein. Das Metall kann verzinkt sein. Das Metall kann beschichtet sein.

In manchen Ausführungsformen ist das Verbindungselement aus Kunststoff und/oder einem Verbundmaterial hergestellt oder weist wenigstens eines dieser Materialien auf.

In manchen Ausführungsformen weist das Verbindungselement - als Beispiel einer Konnektionseinrichtung - eine Schrauben-Mutter-Anordnung und/oder eine Schnellspannvorrichtung zum kraftschlüssigen Fixieren der Stangen mittels des Verbindungselements auf.

Eine Schnellspannvorrichtung kann als Schnellspanner bezeichnet werden.

Eine Schnellspannvorrichtung kann eine Klemmvorrichtung sein, die schnell und optional ohne Werkzeug von Hand gelöst oder festgesetzt bzw. gespannt werden kann.

Rein exemplarisch kann die Schrauben-Mutter-Anordnung oder die Schnellspannvorrichtung eine Gesamtlänge zwischen 20 mm und 40 mm aufweisen, bevorzugt zwischen 20 mm und 30 mm, weiter bevorzugt ca. 25 mm.

In manchen Ausführungsformen sind die Stangen entlang ihrer gesamten Längserstreckung oder nur entlang eines Teils hiervon gerade.

In manchen Ausführungsformen sind die Stangen entlang ihrer gesamten Längserstreckung oder nur entlang eines Teils hiervon gebogen.

Die Verbindungselemente können je nach Ausgestaltung der Stangen als gerade oder gebogene Stangen entsprechende Aufnahmen oder Aufnahmeabschnitte für die jeweilige Stangenform aufweisen.

In manchen Ausführungsformen weist das Pflanzenstützsystem wenigstens eine Haltevorrichtung zum Befestigen des Pflanzenstützsystems an einer senkrechten Fläche, etwa einer Wand, auf.

In einigen Ausführungsformen ist das wie hierin beschriebene Verbindungselement ausgestaltet, um mittels einer Haltevorrichtung (z. B. Schraube, Dübel, usw.) mit der Wand oder einem anderen Ort befestigt zu werden. Hierzu kann die Konnektionseinrichtung lang genug ausgestaltet sein, um, z. B. als Schraube, in die Wand eingebracht werden zu können. Die Konnektionseinrichtung kann hierzu als Schraube ausgestaltet sein, die durch das Verbindungselement hindurchreicht, und die, anstelle mit einer üblichen Mutter zum Verklemmen der Stangen verschraubt zu werden, in eine Langschraube mit endseitigem Gewinde oder in eine Langmutter hineingeschraubt werden kann, um mit deren endseitigem spiraligem Abschnitt wiederum, beispielsweise mittels eines Dübels, z. B. in einer Wand, verankert zu werden. Die Langschraube mit endseitigem Innengewinde oder die Langmutter kann dabei bereits vor ihrer Verbindung mit der Konnektionseinrichtung ihrerseits mit der Wand verbunden sein. Auf diese Weise kann möglicherweise Material eingespart werden. Zudem kann der Arbeitsschritt des Verschraubens der durch die Durchgangsöffnung geführten Schraube im möglicherweise engen Raum zwischen Rückseite des Verbindungselements und einer Hauswand, an welcher das Pflanzenstützsystem vorgesehen ist, deutlich erleichtert werden.

In manchen Ausführungsformen weist die Konnektionseinrichtung eine Langmutter oder eine Mutter auf, welche zwei jeweils endseitige oder stirnseitige Innengewinde aufweist.

Die Haltevorrichtung kann eine Rohrschelle bzw. eine Schelle, eine Steckschraube oder eine andere Haltevorrichtung sein. Eine Steckschraube kann in der Wand optional mittels eines Dübels fixiert werden.

In einigen Ausführungsformen ist das wie hierin beschriebene Verbindungselement nicht ausgestaltet, um mittels einer Haltevorrichtung (z. B. Schraube, Dübel, usw.) mit der Wand oder einem anderen Ort befestigt zu werden. Verbindungselemente, welche nicht der Fixierung des Pflanzenstützsystems an einer Wand oder einer anderen, zumeist vertikalen Fläche dienen, bieten den Vorteil, frei innerhalb des Pflanzenstützsystems verschiebbar zu sein. Wächst die Pflanze z. B. weiter nach rechts und in die Höhe, so kann in einem rechten Bereich des Pflanzenstützsystems ein Verbindungselement an einer vorhandenen Stange (als ersten Stange) des Pflanzenstützsystems vorgesehen sein, das keine Befestigung z. B. an der Wand sicherstellen soll, und in das eine weitere Stange (als zweite Stange) eingesetzt und darin verklemmt, verschraubt, usw. werden kann. Die frei wählbare Position eines Verbindungselements dieser Ausgestaltung auch noch nachdem das Pflanzenstützsystems auf andere Weise z. B. an der Wand befestigt wurde, kann einen Vorteil darstellen. Da ein solches Verbindungselement keine Haltevorrichtung für seine Befestigung an der Wand benötigt, kann diese vorteilhafterweise entfallen.

Entfallen können Haltevorrichtungen auch, wenn das Pflanzenstützsystem freistehend (also ohne Abstützung an z. B. einer Wand) verwendet werden soll.

In manchen Ausführungsformen weist das Pflanzenstützsystem eine Boden-Fixiervorrichtung zum Befestigen des Pflanzenstützsystems in einem Boden auf.

Die Boden-Fixiervorrichtung kann ein zulaufender Abschnitt sein, mit welchem wenigstens eine der Stangen oder ein anderer Abschnitt des Pflanzenstützsystems in den Boden, etwa in das Erdreich, eingesteckt werden kann.

In manchen Ausführungsformen sind die Stangen, bezogen auf ihre Längsausrichtung, mittels des Verbindungselements in einem Winkel zwischen 0 Grad und 90 Grad oder mehr (bis zu 360°) stufenlos ausrichtbar. Diese Einstellbarkeit kann sich auf den Winkel beziehen, der zwischen zwei Stangen vorliegt, die mittels desselben Verbindungselements verbunden oder miteinander verbunden sind. Der Winkel kann im Bereich des Verbindungselements bestimmt werden.

In manchen Ausführungsformen weist das Pflanzenstützsystem wenigstens eine Vorrichtung (oder mehrere, etwa eine pro Verbindungselement) zum Halten eines vorbestimmten Abstandes zwischen dem Pflanzenstützsystem und einer Ebene, etwa einer Hauswand, auf. Die Vorrichtung kann mit einem der Verbindungselemente verbunden sein.

In manchen Ausführungsformen weist das Pflanzenstützsystem wenigstens eine derartige Vorrichtung zum Halten in Gestalt einer Hülse, etwa zum Durchführen einer Befestigungsschraube zum Befestigen des Pflanzenstützsystems, auf.

Was hierin zu einem Verbindungselement ausgeführt ist, trifft auf Verbindungselemente zu, die Teil des erfindungsgemäßen Pflanzenstützsystems sind, und ungeschmälert auch auf erfindungsgemäße Verbindungselemente, die nicht oder noch nicht Teil eines solchen Pflanzenstützsystem sind. Zur Vermeidung von Wiederholungen wurde das zu Verbindungselementen des Pflanzenstützsystems Offenbarte nicht erneut in Bezug auf das erfindungsgemäße Verbindungselement offenbart.

Einige oder alle Ausführungsformen können einen oder mehrere der oben oder im Folgenden genannten Vorteile aufweisen.

Das erfindungsgemäße Pflanzenstützsystem kann vorteilhaft bei Wachstum der gestützten Pflanze an deren neue Höhe oder Form angepasst werden. Die Stangen können mittels der lösbaren Verbindungselemente in ihrer Position und Anordnung innerhalb des Pflanzenstützsystems verändert werden, sodass beispielsweise eine Stange bei einem Pflanzenwachstum in einer Richtung, in welche die Pflanze gewachsen ist, nachgeführt wird. Es ist vorteilhaft, dass für eine Anpassung an ein Wachstum der Pflanze nicht das gesamte Pflanzenstützsystem verändert werden muss, sondern einzelne Teile hiervon individuell und flexibel anpassbar sind.

Das erfindungsgemäße Pflanzenstützsystem kann vorteilhaft an ein gewünschtes Pflanzenwachstum angepasst werden. Wenn beispielsweise einzelne Pflanzentriebe in eine bestimmte Richtung wachsen sollen, beispielsweise um an einer Hauswand ein bestimmtes Muster oder eine bestimmte Pflanzenabdeckung zu erzielen, kann dies mittels des erfindungsgemäßen Pflanzenstützsystems vorteilhaft einfach und flexibel erfolgen. Es können vorteilhaft einzelne Stangen und/oder Verbindungselemente verschoben oder verändert werden, ohne das gesamte Pflanzenstützsystem anpassen zu müssen.

Das erfindungsgemäße Pflanzenstützsystem kann vorteilhaft individuell und flexibel erweitert werden. Einzelne Stangen und/oder Verbindungselemente können an End- oder Eckbereiche oder an innere Bereiche des Pflanzenstützsystems adaptiert werden, ohne das gesamte Pflanzenstützsystem anpassen zu müssen. Mittels zusätzlicher Verbindungselemente können weitere Stangen an das vorhandene Pflanzenstützsystem montiert bzw. angeklemmt werden.

Das erfindungsgemäße Pflanzenstützsystem ermöglicht vorteilhaft, einzelne Stangen und/oder Verbindungselemente auszutauschen, wenn beispielsweise einzelne Teile beschädigt, verbogen oder auf eine andere Art und Weise, beabsichtigt oder unbeabsichtigt, verändert wurden. Der Austausch einzelner Stangen und/oder Verbindungselemente kann erfolgen, ohne das gesamte Pflanzenstützsystem demontieren zu müssen.

Das erfindungsgemäße Pflanzenstützsystem ist vorteilhaft modular aufgebaut. Einzelne Module, zu denen insbesondere die Stangen und die Verbindungselemente zu zählen sind, können ausgetauscht oder an das vorhandene und montierte System adaptiert und erweitert werden. Der modulare Aufbau kann somit ein ständiges Erweitern und quasi ein Mitwachsen des Pflanzenstützsystems an das Wachsen der gestützten Pflanze ermöglichen.

Die vorliegende Erfindung wird im Folgenden anhand der beigefügten Zeichnung, in welcher identische Bezugszeichen gleiche oder ähnliche Bauteile bezeichnen, exemplarisch erläutert. In den zum Teil stark vereinfachten Figuren gilt:
- **Fig. 1a,b,c**: zeigen ein erfindungsgemäßes Pflanzenstützsystem mit Stangen und Verbindungselementen in verschiedenen Anordnungen;
- **Fig. 2**: zeigt das erfindungsgemäße Pflanzenstützsystem mit einer ersten und einer zweiten Stange sowie einem Verbindungselement in einer perspektivischen Ansicht;
- **Fig. 3**: zeigt die Innenseiten von zwei scheibenförmigen Elementen des Verbindungselements;
- **Fig. 4**: zeigt die Außenseiten von zwei scheibenförmigen Elementen des Verbindungselements mit einer Schraubenverbindung;
- **Fig. 5**: zeigt ein erfindungsgemäßes Pflanzenstützsystem aus Fig. 1 mit zwei Haltevorrichtungen, die an einer Hauswand befestigt sind; und
- **Fig. 6a,b,c**: zeigen ein scheibenförmiges Element eines erfindungsgemäßen Verbindungselements in drei verschiedenen Ansichten.

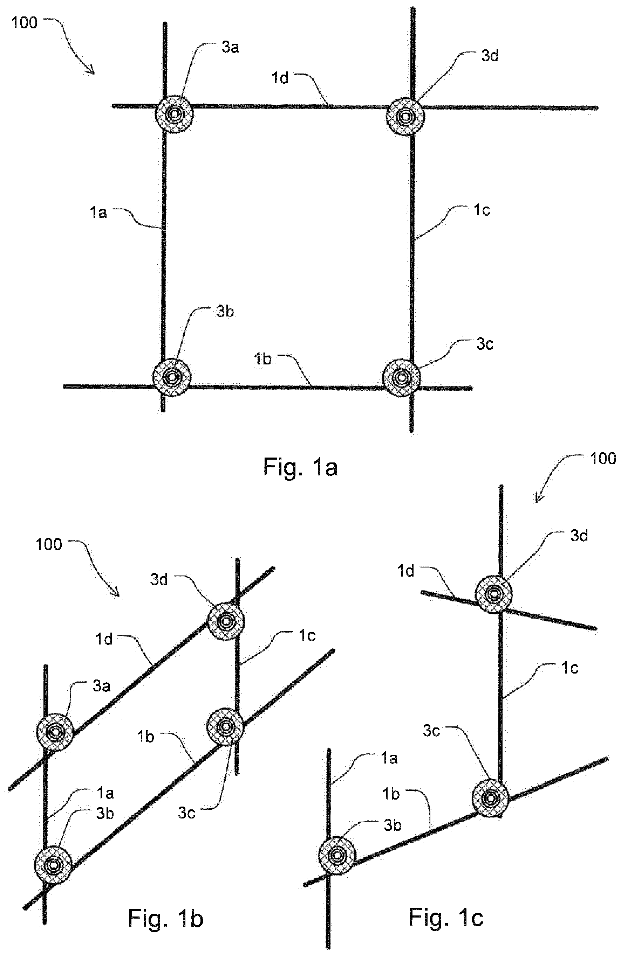

**Fig. 1a** zeigt ein erfindungsgemäßes Pflanzenstützsystem 100 mit rein exemplarisch vier Stangen 1a, 1b, 1c, 1d und vier Verbindungselementen 3a, 3b, 3c, 3d.

Das Pflanzenstützsystem 100 ist einem montierten Zustand dargestellt, in welchem jedes Verbindungselement 3a, 3b, 3c, 3d optional mit genau zwei Stangen 1a, 1b, 1c, 1d verbunden ist. Mittels jedes der lösbaren Verbindungselemente 3a, 3b, 3c, 3d werden Abschnitte von genau zwei Stangen 1a, 1b, 1c, 1d festgeklemmt. Die Klemmung erfolgt in diesem Ausführungsbeispiel rein exemplarisch mittels einer Schrauben-Mutter-Verbindung.

Die Stangen 1a, 1b, 1c, 1d sind rein exemplarisch senkrecht zueinander angeordnet. Das erfindungsgemäße Pflanzenstützsystem 100 ermöglicht jedoch ebenso andere Winkelanordnungen, wie dies in Fig. 1b und Fig. 1c gezeigt ist.

Die vier Verbindungselemente 3a, 3b, 3c, 3d sind exemplarisch innen, bezogen auf das durch die Stangen 1a, 1b, 1c, 1d aufgespannte Viereck, angeordnet. Alternativ können einzelne, mehrere oder alle Verbindungselemente 3a, 3b, 3c, 3d in einem anderen Quadranten der jeweiligen Kreuzungspunkte angeordnet sein.

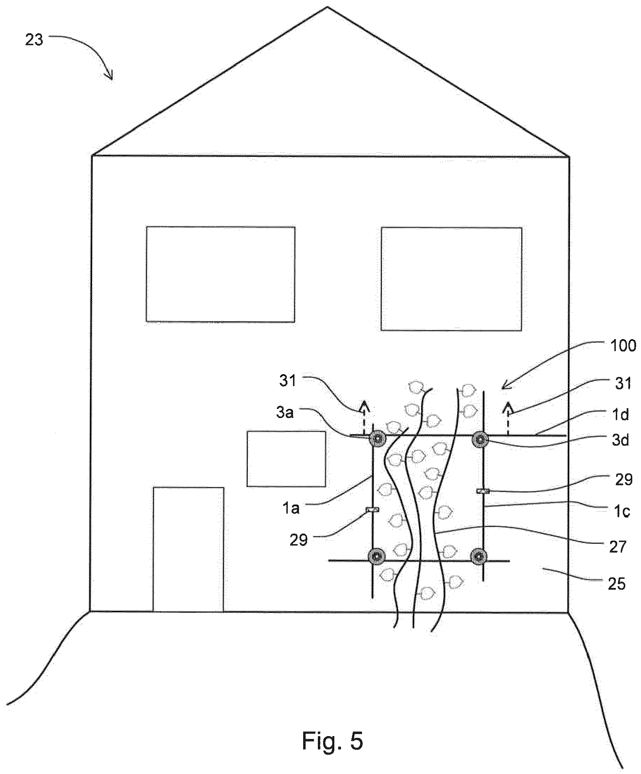

Pflanzen bzw. Pflanzentriebe, die in Fig. 1a nicht dargestellt sind (siehe hierfür Fig. 5), können an den einzelnen Stangen 1a, 1b, 1c, 1d befestigt werden, beispielsweise mittels dafür vorgesehener Clips, mittels Bändern oder anderer Hilfsmittel. Wenn die Pflanze wächst, kann beispielsweise die Position der Stange 1d durch Lockern der Schrauben-Mutter-Verbindungen der Verbindungselemente 3a und 3d, anschließendes Verschieben der Stange 1d nach oben (bezogen auf die Darstellung in Fig. 1a) und nachfolgendes erneutes Festziehen der Schrauben-Mutter-Verbindungen der Verbindungselemente 3a und 3d angepasst werden. Ist gewünscht, dass die Pflanze in eine bestimmte Richtung wächst, so kann die Stange 1d unter einem anderen Winkel als in Fig. 1 gezeigt angeordnet werden. Ergänzend oder alternativ kann sie in ihrer Längsrichtung verschoben und anschließend erneut mittels der Verbindungselemente 3a und 3d verklemmt werden.

**Fig. 1b** zeigt das erfindungsgemäße Pflanzenstützsystem 100 aus Fig. 1a in einer anderen Anordnung. Die in Fig. 1b gezeigte rautenförmige Anordnung kann ausgehend von der Anordnung der Fig. 1 durch einfaches Lösen bzw. Lockern der jeweiligen Schrauben-Mutter-Verbindungen der Verbindungselemente 3a, 3b, 3c, 3d, ausgehend beispielsweise von der Anordnung aus Fig. 1a, durch anschließendes, gewünschtes Anordnen bzw. Verdrehen und/oder Verschieben der Stangen 1a, 1b, 1c, 1d sowie durch ein nachfolgendes erneutes Festziehen der Schrauben-Mutter-Verbindungen erzielt werden.

Ein derartiges Verändern der Anordnungen der Stangen 1a, 1b, 1c, 1d ist auch nach einem Befestigen von Pflanzen bzw. Pflanzentrieben möglich, um beispielsweise die Richtung des Pflanzenwuchses zu ändern, zu korrigieren oder neu auszurichten. Dies kann durch ein Verschieben einer der Verbindungselemente entlang einer der Stangen erfolgen.

**Fig. 1c** zeigt das erfindungsgemäße Pflanzenstützsystem 100 aus den Fig.1a und 1b in einer weiteren Anordnung.

Für die Anordnung der Fig. 1c wurde das Verbindungselement 3a entfernt, weil die Stangenanordnungen diesen Kreuzungspunkt der Stangen 1a und 1d nicht mehr vorsehen bzw. zulassen. Beispielsweise könnte an den rechten Endbereichen der Stangen 1b und 1d eine oder mehrere weitere Stangen angeordnet werden, die dann mit entsprechenden Verbindungselementen, die hier nicht gezeigt sind, fixiert bzw. festgeklemmt werden könnten. Auf diese Art und Weise kann das Pflanzenwachstum individuell beeinflusst und ausgerichtet werden.

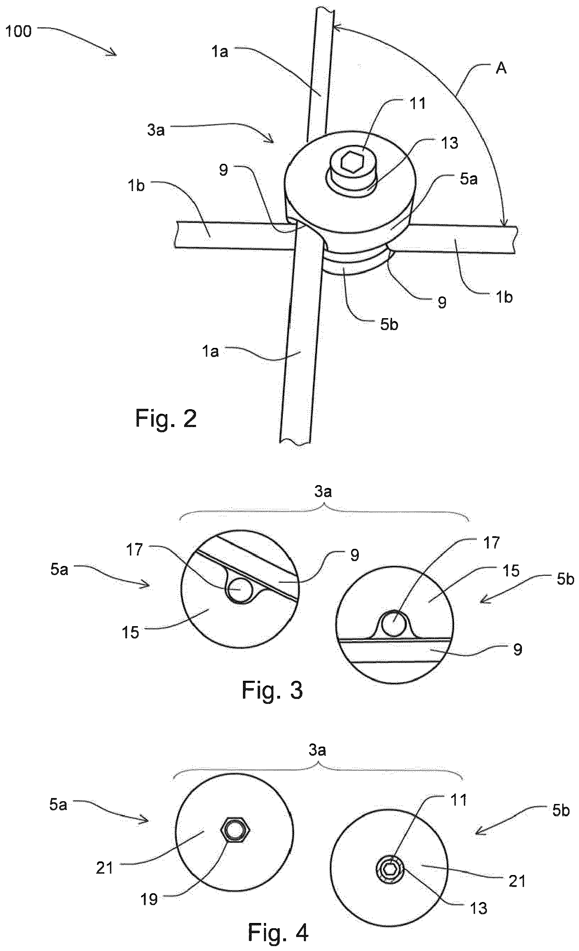

**Fig. 2** zeigt das erfindungsgemäße Pflanzenstützsystem 100, oder Teile hiervon, mit der ersten Stange 1a und der zweiten Stange 1b sowie dem Verbindungselement 3a in einer perspektivischen Ansicht. Das Verbindungselement 3a weist ein oberes scheibenförmiges Element 5a und ein unteres scheibenförmiges Element 5b auf. Die scheibenförmigen Elemente 5a, 5b werden im Folgenden, wie auch schon weiter oben, vereinfachend als Scheiben 5a, 5b bezeichnet, wobei die Elemente 5a, 5b grundsätzlich auch in anderen Formen als, wie hier dargestellt, runde Scheiben 5a, 5b ausgeführt sein können. Beispielsweise können die Scheiben 5a, 5b als Klammern mit einem schwenkbaren Klemmhebel, als Schnellspannverschluss oder anders ausgeführt sein.

Die Innenseiten 15 (siehe Fig. 3) der Scheiben 5a, 5b bilden bereichsweise das Außenprofil der Stangen 1a, 1b ab. Diese Abbildung 9 kann als Vertiefung 9 bezeichnet werden. Die Stangen 1a, 1b werden in diese Vertiefungen 9 hineingelegt bzw. hineingedrückt und können, bevor die Scheiben 5a, 5b fest gegeneinander geklemmt bzw. gepresst werden, geführt werden, um beispielsweise in ihrer Längsausrichtung entsprechend einer gewünschten Richtung, in welcher die Pflanze wachsen soll, angepasst zu werden.

Je nach Oberflächenbeschaffenheit der Stangen 1a, 1b und/oder der Vertiefungen 9 des Scheibenmaterials kann dieser Reibwiderstand ausgewählt oder festgelegt sein. Beispielsweise können zu glatte Oberflächen unerwünscht sein, da die Stangen 1a, 1b unbeabsichtigt verrutschen oder sogar aus der Scheibe 5a, 5b herausrutschen könnten.

Bevor die Scheiben 5a, 5b fest gegeneinander verklemmt werden, kann der Winkel A der Stangen 1a, 1b zueinander variiert und eingestellt werden. Der Winkel A kann beispielsweise stufenlos zwischen 0 Grad und 180 Grad oder bis 360° variierbar sein.

Die Scheiben 5a, 5b werden in diesem Ausführungsbeispiel exemplarisch mittels einer Schrauben-Mutter-Verbindung gegeneinander festgeklemmt bzw. fixiert. In Fig. 2 sind der Schraubenkopf 11 und eine optionale Unterlegscheibe 13 zu sehen. Die Schraube ist exemplarisch als Innensechskantschraube ausgeführt. Auf der Unterseite der unteren Scheibe 5b kann die Schraube mittels einer Mutter 19 und optional einer weiteren Unterlegscheibe festgezogen werden.

Dabei können Schraubenkopf 11 oder Mutter 19 rotationsfest in einer der Scheiben 5a, 5b festgelegt sein. Dies erlaubt es, die Klemmwirkung mittels eines Werkzeugs zu bewirken. Ein Kontern oder Gegenhalten mit einem zweiten Werkzeug zum Verhindern eines Mitdrehens von Schraubenkopf 11 oder Mutter 19 kann vorteilhaft unterbleiben.

**Fig. 3** zeigt die Innenseiten 15 von zwei exemplarisch ausgeführten scheibenförmigen Elementen 5a, 5b des Verbindungselements 3a.

Die Scheiben 5a, 5b sind exemplarisch in dieser Ausführungsform identisch bzw. baugleich zueinander. Dies hat den Vorteil, dass bei einer Vielzahl von zu montierenden Verbindungselementen 3a, 3b, 3c, 3d für ein erfindungsgemäßes Pflanzenstützsystem 100 die Scheiben 5a, 5b nicht paarweise zugeordnet werden müssen. Dieser Vorteil kann für die Herstellung einfacher und kostengünstiger sein, da beispielsweise nur eine Spritzgussform als Spritzgussteil notwendig ist. Für die Montage können identische Scheiben 5a, 5b eine wesentliche Zeitersparnis ermöglichen, da keine paarweisen Zuordnungen notwendig sind.

Die Vertiefungen 9 sind schalenförmige Vertiefungen 9 (siehe Fig. 2), die die Stangen 1a, 1b, 1c, 1d bereichsweise aufnehmen. Beispielsweise können die Vertiefungen 9 in ihrer Tiefe ca. die Hälfte des Umfangs der Stangen 1a, 1b, 1c, 1d aufnehmen bzw. umfassen.

Die Tiefe kann alternativ mehr als die Hälfte betragen, sodass die Stangen 1a, 1b, 1c, 1d entweder in die Vertiefungen 9 längsseitig eingeschoben oder mittels eines elastischen Materials der Scheiben 5a, 5b eingesteckt werden. Dies kann vorteilhaft sein, da die Stangen 1a, 1b, 1c, 1d dann nicht unbeabsichtigt herausfallen können. Ebenso kann die Tiefe weniger als die Hälfte des Umfangs der Stangen 1a, 1b, 1c, 1d betragen.

In Fig. 3 sind die Durchgangsbohrungen 17 für die Schrauben-Mutter-Verbindung dargestellt. Die Schrauben, oder andere Verbindungsmittel, können durch diese Durchgangsbohrungen durchgeführt werden. Ein anderes Verbindungsmittel kann beispielsweise eine sogenannte Schnellspannvorrichtung sein. Eine Schnellspannvorrichtung ist eine Klemmvorrichtung, die schnell und optional ohne Werkzeug von Hand gelöst und festgesetzt bzw. gespannt werden kann.

Wenn hierin von einer Bohrung oder Durchgangsbohrung die Rede ist, so gilt das Offenbarte auch für Öffnungen oder Durchgangsöffnungen. Eine Beschränkung auf die Art der Herstellung der Öffnung oder Bohrung ist durch das Verwenden des Begriffs "Bohrung" nicht beabsichtigt. Die Bohrung oder Durchgangsöffnung kann, wo immer hierin genannt, vielmehr auch gegossen oder auf andere Weise erzeugt sein.

**Fig. 4** zeigt die Außenseiten 21, genauer die obere Seite 21 von zwei scheibenförmigen Elementen 5a, 5b des Verbindungselements 3a mit einer Schraubenverbindung. Die Schraubenverbindung umfasst eine Schraube, exemplarisch als Innensechskantschraube ausgeführt, mit einem Schraubenkopf 11 und einer Mutter 19. Optional ist eine Unterlegscheibe 13 zwischen dem Schraubenkopf 11 und der Oberseite 21 der Scheibe 5a angeordnet. Optional kann weiterhin eine Unterlegscheibe 13 zwischen der Mutter 19 und der Innenseite 15 (Unterseite) der Scheibe 5a angeordnet sein (in Fig. 4 nicht dargestellt).

Optional kann die Mutter 19 in der Scheibe 5a formschlüssig angeordnet sein. Damit kann vorteilhaft eine Verdrehsicherung erreicht werden. Die Schraube kann mit der Mutter verschraubt und das Verbindungselement 3a geklemmt werden, ohne dass die Mutter 19 festgehalten bzw. fixiert werden müsste. Dies kann bei einem Pflanzenstützsystem 100 mit zahlreichen Verbindungselementen 3a, 3b, 3c, 3d für die Montage vorteilhaft sein. Allerdings wären dann die beiden Scheiben 5a, 5b nicht identisch bzw. baugleich. Die Vorteile von baugleichen Scheiben 5a, 5b wurden bereits diskutiert (siehe oben).

**Fig. 5** zeigt ein erfindungsgemäßes Pflanzenstützsystem 100 aus Fig. 1 mit zwei Haltevorrichtungen 29, die an einer Hauswand 25 eines Hauses 23 befestigt sind. An dem Pflanzenstützsystem 100 ist eine Pflanze 27 mit Pflanzentrieben befestigt, beispielsweise mittels Pflanzenclips oder anderer Befestigungen. Wenn die Pflanze 27 entlang der Hauswand 25 in die Höhe wächst, kann beispielsweise die obere Stange 1d mit dem Pflanzenwachstum in Pfeilrichtung 31 nachgeführt werden. Dies ermöglicht vorteilhaft ein gerichtetes und/oder stabilisierendes Pflanzenwachstum. Alternativ oder ergänzend können die Verbindungselemente 3a, 3d längs der Stangen 1a, 1c, 1d nach einer Lockerung der Klemmung durch die Schraubenverbindung, nach oben, nach unten und/oder zur Seite hin verschoben werden, um ein gewünschtes Wachstum und eine gewünschte Wachstumsrichtung der Pflanzentriebe zu erreichen. Zusätzlich können die Winkel der Stangen 1a, 1c, 1d zueinander verändert werden (siehe Fig. 1b und Fig. 1c).

Die Haltevorrichtung 29 kann beispielsweise eine Rohrschelle bzw. eine Schelle zur Befestigung der Stangen 1a, 1c, an der Hauswand 25 sein.

Optional kann das erfindungsgemäße Pflanzenstützsystem 100 an einer Hauswand 25 eines Hauses 23, einer Mauer oder einer anderen Wand mittels eines oder mehrerer Verbindungselemente 3a, 3b, 3c, 3d befestigt werden.

Insbesondere kann diese Befestigung mittels einer oder mehrerer Schrauben bzw. Schraubenverbindungen erfolgen, die einerseits die scheibenförmigen Elemente 5a, 5b mit den Stangen 1a, 1b, 1c, 1d fixieren bzw. verklemmen, und andererseits beispielsweise in einer Hauswand 25 befestigt sind oder werden. Die Schrauben sind dann entsprechend lang, um den Abstand zwischen dem Pflanzenstützsystem 100 und der Hauswand 25 zu überbrücken. Solche Schrauben sind funktionell gleichzeitig Haltevorrichtungen, wie sie zuvor als separate Bauteile beschrieben wurden. Neben diesen Schrauben der Verbindungselemente 3a, 3b, 3c, 3d zur gleichzeitigen Fixierung an einer Hauswand 25 kann das erfindungsgemäße Pflanzenstützsystem 100 weitere Verbindungselemente 3a, 3b, 3c, 3d aufweisen, die nicht zur Fixierung an einer Hauswand 25 vorgesehen sind und beispielsweise längs einer oder mehrerer Stangen 1a, 1b, 1c, 1d verschiebbar sind, um das erfindungsgemäße Pflanzenstützsystem 100 an ein Pflanzenwachstum anpassen zu können.

Optional können bei der oben beschriebenen Befestigung des Pflanzenstützsystems 100 an einer Hauswand 25 mittels der Verbindungselemente 3a, 3b, 3c, 3d Vorrichtungen zum Halten eines bestimmten Abstandes zwischen dem Pflanzenstützsystem 100 und der Hauswand 25 vorgesehen sein. Dies können beispielsweise Schraubenhülsen in der Länge sein, welche dem gewünschten Abstand des Pflanzenstützsystems 100 zur Hauswand 25 entsprechen.

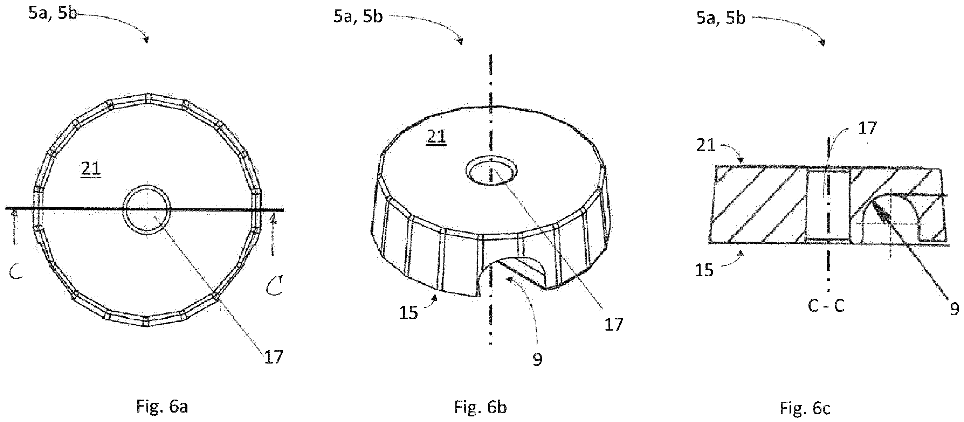

**Fig. 6a** zeigt ein scheibenförmiges Element 5a, 5b eines erfindungsgemäßen Verbindungselements (z. B. 3a, 3b, 3c, 3d) in einer exemplarischen Ausführungsform von oben. Der Blick ist auf die Außenseite 21, hier die Oberfläche, des scheibenförmigen Elements 5a, 5b gerichtet.

Es ist eine vieleckige Form zu erkennen, die entlang ihres Umfangs rein exemplarisch 18 Ecken aufweist. Dies kann erfindungsgemäß bereits als rund gelten, zumal die Ecken gleich voneinander beabstandet sind und alle Ecken denselben Abstand zum Mittelpunkt des scheibenförmigen Elements 5a, 5b aufweisen. Der Mittelpunkt ist in der Fig. 6a durch ein Kreuz gekennzeichnet.

Der Mittelbereich des scheibenförmigen Elements 5a, 5b wird hier beispielhaft für eine Durchgangsbohrung oder -Öffnung 17 genutzt, die optional zur Aufnahme einer Schraube oder einer anderen Konnektionseinrichtung dienen kann.

Der Fig. 6a ist ferner zu entnehmen, dass das scheibenförmige Element 5a, 5b mehr als einen Radius aufweisen kann. In der vorliegenden Ausführungsform sind exemplarisch drei Radien deutlich zu erkennen. Zwei von ihnen gehen auch aus Fig. 6c gut erkennbar hervor. Sie können durch die optionale Trapezform des scheibenförmigen Elements 5a, 5b im Querschnitt bedingt sein, siehe Fig. 6c.

**Fig. 6b** zeigt das scheibenförmige Element 5a, 5b der Fig. 6a in perspektivischer Ansicht von schräg oben.

Beispielhaft ist die Abbildung 9, hier eine Vertiefung oder Rille, hier exemplarisch als Halbschalenform ausgebildet, zur Aufnahme eines Rundprofils einer zu befestigenden Stange 1a, 1b, 1c, 1d (Stange nicht in der Figur dargestellt) deutlich zu erkennen. Es ist anhand der perspektivischen Darstellung außerdem zu erkennen, dass die Abbildung 9, also die Rille oder Vertiefung, nicht durch einen Mittelbereich oder durch einen zentralen Bereich der Haupterstreckungsebene des scheibenförmigen Elements 5a, 5b verläuft.

Im Mittelbereich ist jedoch die bereits oben erwähnte Durchgangsbohrung 17 gut zu erkennen. Der Mittelbereich ist hier optional als ein Drehzentrum des scheibenförmigen Elements 5a, 5b, bezogen auf die Außenseite 21, zu verstehen.

Ferner ist in Fig. 6b gut zu erkennen, dass hier beispielhaft der Radius des scheibenförmigen Elements 5a, 5b an der Außenseite 21 (Oberseite) kleiner ist als an der Innenseite 15 (Unterseite).

Werden zwei scheibenförmige Elemente 5a, 5b mittels jeweils ihrer Innenseiten 15 miteinander in Kontakt gebracht, so stellt die Kontaktebene der beiden Innenseiten 15 ihre Verbindungsfläche dar.

Werden zwei scheibenförmige Elemente 5a, 5b mittels jeweils ihrer Innenseiten 15 miteinander in Kontakt gebracht, so kommt optional ein direkter Kontakt der Oberflächen der in Fig. 6b nicht gezeigten Stangen zustande, die über die Innenseite 15 der scheibenförmigen Elemente 5a, 5b hinausragen (in Fig. 6b nach unten). Wenn weiterhin die beiden scheibenförmigen Elemente 5a, 5b aneinandergepresst werden, werden die Stangen in die abgebildete Form der Scheiben hineingedrückt oder gegeneinander verklemmt und somit gegen ein Längsverschieben der Stangen blockiert bzw. fixiert. Die Stangen sind in ihrem Durchmesser in einigen Ausführungsformen ausgestaltet, um über die Kontaktebene, die mittels der beiden Innenseiten 15 gebildet wird, überzustehen oder herausragen.

**Fig. 6c** zeigt das scheibenförmige Element 5a, 5b der Fig. 6a in einem Querschnitt entlang der Achse C - C der Fig. 6a.

Die obigen Ausführungen zu Lage und Größe der Durchgangsbohrung 17, der Abbildung 9 eines Stangenabschnitts sowie der Radien des scheibenförmigen Elements 5a, 5b werden hier erneut verdeutlicht. Es wird auf die obigen Figurenbeschreibungen verwiesen, um Doppelungen zu vermeiden.

### Bezugszeichenliste

- 100: Pflanzenstützsystem
- A: Winkel der Stangen zueinander
- 1a, 1b ,1c, 1d: Stange
- 3a, 3b, 3c, 3d: Verbindungselement
- 5a, 5b: scheibenförmiges Element; Scheibe

- 9: Abbildung; Vertiefung
- 11: Schraubenkopf
- 13: Unterlegscheibe
- 15: Innenseite
- 17: Durchgangsbohrung
- 19: Mutter (der Schraubenverbindung)
- 21: Außenseite
- 23: Haus
- 25: Hauswand, Wand
- 27: Pflanze; Pflanzentriebe
- 29: Haltevorrichtung
- 31: Pflanzenwachstumsrichtung; Pfeilrichtung

## Patentansprüche

1. Pflanzenstützsystem (100), aufweisend wenigstens eine erste Stange (1a) und eine zweite Stange (1b) zum Stützen wenigstens einer Pflanze (27) hieran, sowie ein Verbindungselement (3a) zum lösbaren Verbinden der beiden Stangen (1a, 1b) miteinander, wobei das Verbindungselement (3a) längs der ersten Stange (1a) und längs der zweiten Stange (1b) verschiebbar ist.

2. Pflanzenstützsystem (100) nach Anspruch 1, wobei das Verbindungselement (3a) ein Klemmsystem zum kraftschlüssigen und/oder formschlüssigen, insbesondere lösbaren, Fixieren der Stangen (1a, 1b) am Verbindungselement (3a) aufweist.

3. Pflanzenstützsystem (100) nach Anspruch 1 oder 2, wobei das Verbindungselement (3a) wenigstens zwei Stangen (1a, 1b) jeweils vollständig zumindest bereichsweise umgreift und mittels eines Klemmsystems fixierbar ist.

4. Pflanzenstützsystem (100) nach einem der vorangegangenen Ansprüche, wobei das Verbindungselement (3a) zwei scheibenförmige Elemente (5a, 5b) aufweist, die auf ihrer Innenseite (15) jeweils zumindest bereichsweise das Außenprofil der Stangen (1a, 1b) abbilden oder eine Aufnahme hierfür haben.

5. Pflanzenstützsystem (100) nach dem vorangegangenen Anspruch, wobei das Verbindungselement (3a) zwei identische scheibenförmige Elemente (5a, 5b) aufweist.

6. Pflanzenstützsystem (100) nach einem der beiden vorangegangenen Ansprüche, wobei jede Innenseite (15) der scheibenförmigen Elemente (5a, 5b) zumindest bereichsweise das Außenprofil einer der beiden Stangen (1a, 1b) abbildet.

7. Pflanzenstützsystem (100) nach einem der drei vorangegangenen Ansprüche, wobei die Innenseiten (15) der scheibenförmigen Elemente (5a, 5b) jeweils zumindest bereichsweise das Außenprofil einer der beiden Stangen (1a, 1b) abbilden, sodass jeweils eine Stange (1a, 1b) mittels Reibschluss zwischen einem Bereich einer Innenseite (15) und einem Bereich einer Oberfläche einer weiteren Stange (1a, 1b) kraftschlüssig fixierbar ist.

8. Pflanzenstützsystem (100) nach einem der vorangegangenen Ansprüche, wobei die Stangen (1a, 1b, 1c, 1d) rohrförmige Rundprofile und/oder rohrförmige Rechteckprofile aufweisen.

9. Pflanzenstützsystem (100) nach einem der vorangegangenen Ansprüche, wobei die Stangen (1a, 1b) aus Metall hergestellt sind oder Metall aufweisen.

10. Pflanzenstützsystem (100) nach einem der vorangegangenen Ansprüche, wobei das Verbindungselement (3a,3b,3c,3d) aus Kunststoff und/oder einem Verbundmaterial hergestellt ist oder wenigstens eines dieser Materialien aufweist.

11. Pflanzenstützsystem (100) nach einem der vorangegangenen Ansprüche, wobei das Verbindungselement (3a, 3b, 3c, 3d) eine Schrauben-Mutter-Anordnung oder eine Schnellspannvorrichtung zum kraftschlüssigen Fixieren der Stangen (1a, 1b, 1c, 1d) mittels des Verbindungselements (3a, 3b, 3c, 3d) aufweist.

12. Pflanzenstützsystem (100) nach einem der vorangegangenen Ansprüche, wobei die Stangen (1a, 1b, 1c, 1d) in ihrer Längsausrichtung gerade und/oder gebogen sind.

13. Pflanzenstützsystem (100) nach einem der vorangegangenen Ansprüche, wobei das Pflanzenstützsystem (100) wenigstens eine Haltevorrichtung (29) zum Befestigen des Pflanzenstützsystems (100) an einer Fläche oder einer senkrechten Fläche, etwa einer Wand (25), aufweist.

14. Pflanzenstützsystem (100) nach einem der vorangegangenen Ansprüche, wobei die Stangen (1a, 1b, 1c, 1d), insbesondere bezogen auf ihre Längsausrichtung, mittels des Verbindungselements (3a, 3b, 3c, 3d) in einem Winkel zwischen 0 Grad und 180 Grad stufenlos ausrichtbar sind.

15. Verbindungselement (3a, 3b, 3c, 3d) zum lösbaren Verbinden wenigstens einer ersten Stange (1a) und einer zweiten Stange (1b) zum Bilden eines Pflanzenstützsystems (100) zum Stützen wenigstens einer Pflanze (27) hieran.
